# EUROPÄISCHE PATENTSCHRIFT

(11) **EP 4 182 281 B1**
(45) Veröffentlichungstag und Bekanntmachung des Hinweises auf die Patenterteilung: **12.06.2024**
(21) Anmeldenummer: 21748796.6
(22) Anmeldetag: 07.07.2021
(51) Int. Cl.: C04B 2/12

(54) **GLEICHSTROM-GEGENSTROM-REGENERATIV-SCHACHTOFEN UND VERFAHREN ZUM BRENNEN VON KARBONATGESTEIN**
PARALLEL-FLOW REGENERATIVE SHAFT KILN AND METHOD FOR CALCINING CARBONATE ROCK
FOUR À CUVE À RÉGÉNÉRATION À COURANT PARALLÈLE ET À CONTRE-COURANT ET PROCÉDÉ POUR CALCINER DES ROCHES CARBONÉES

(30) Priorität: 20.07.2020 DE 102020004372
(43) Veröffentlichungstag der Anmeldung: 24.05.2023
(73) Patentinhaber: Maerz Ofenbau AG, 8002 Zürich (CH); thyssenkrupp AG, 45143 Essen (DE); thyssenkrupp Polysius GmbH, 59269 Beckum (DE)
(72) Erfinder: PIRINGER, Hannes, 5712 Beinwil am See (CH)
(74) Vertreter: thyssenkrupp Intellectual Property GmbH
(86) Internationale Anmeldenummer: PCT/EP2021/068842
(87) Internationale Veröffentlichungsnummer: WO 2022/017796

(56) Entgegenhaltungen:
- RU-C1- 2 724 835
- MEYER ZU RIEMSLOH H ET AL: "BETRIEBSERFAHRUNGEN MIT FASERSTOFF-FILTERN AN KALKSCHACHTOFEN", ZKG INTERNATIONAL - ZEMENT - KALK - GIPS INTERNATIONAL, BAUVERLAG BV GMBH, DE, Bd. 42, Nr. 9, 1. September 1989 (1989-09-01), Seiten 459-463, XP000052685, ISSN: 0949-0205
- GUNDLACH H ET AL: "Modern lime shaft kilns and their firing with solid fuels", ZEMENT-KALK-GIPS,, Bd. 39, Nr. 5, 1. Mai 1986 (1986-05-01), Seiten 225-234, XP001264816,

## Beschreibung

Die Erfindung betrifft einen Gleichstrom-Gegenstrom-Regenerativ-Schachtofen (GGR-Schachtofen) sowie ein Verfahren zum Brennen und Kühlen von Material, wie Karbonatgesteinen, mit einem GGR-Schachtofen, der einen Hochdruckventilator aufweist.

Das Brennen von Karbonatgestein in einem GGR-Schachtofen ist seit etwa 60 Jahren bekannt. Ein derartiger, beispielsweise aus der WO 2011/072894 A1 bekannter GGR-Schachtofen weist zwei vertikale, parallele Schächte auf, die zyklisch arbeiten, wobei nur in einem Schacht, dem jeweiligen Brennschacht, gebrannt wird, während der andere Schacht als Regenerativschacht arbeitet. Dem Brennschacht werden Oxidationsgas im Gleichstrom mit dem Material und Brennstoff zugeführt, wobei die dabei entstehenden heißen Abgase zusammen mit der von unten zugeführten, erwärmten Kühlluft über den Überstromkanal in den Abgasschacht geleitet werden, wo die Abgase im Gegenstrom zum Material nach oben abgeleitet werden und das Material dabei vorwärmen. Das Material wird üblicherweise von oben zusammen mit dem Oxidationsgas in den Schacht aufgegeben, wobei Brennstoffe in der Brennzone eingedüst werden.

Das zu brennende Material passiert üblicherweise in jedem Schacht eine Vorwärmzone zum Vorwärmen des Materials, eine sich daran anschließende Brennzone, in der das Material gebrannt wird und eine sich daran anschließende Kühlzone, in der Kühlluft dem heißen Material zugeführt wird.

Die Prozessgase, wie beispielsweise Brenngase, Kühlluft und Verbrennungsluft, werden üblicherweise unter einem Druck von 300 bis 400mbar in den Brennschacht eingeleitet. Dieser Förderdruck wird bisher mittels eines Drehkolbengebläses oder eines Schraubenverdichters erzeugt, wobei diese einen Wirkungsgrad von etwa 60% bis 70% aufweisen. Insbesondere Drehkolbengebläse oder Schraubenverdichter haben den wesentliche Vorteil, dass sie eine zur Drehzahl streng proportionale Luftmenge liefern, welche sich in Abhängigkeit des Gegendruckes nur sehr gering ändert. Ein weiterer Vorteil ist, dass man vor dem Umsteuern auf den anderen Ofenschacht die Luft in die Umgebung ableiten kann und dabei die Stromaufnahme bei den Drehkolbengebläsen oder Schraubenverdichtern sinkt. Nachteilig ist der geringe Wirkungsgrad. Insbesondere bei der Verwendung von Brenngasen mit einem geringen Heizwert, wie beispielsweise Hochofenabgase, ist eine Verdichtung großer Volumenströme notwendig. Die Verdichtung der Prozessgase ist sehr energieaufwändig und es besteht das Bestreben, den Stromverbrauch eines GGR-Schachtofens zu senken.

Davon ausgehend ist es Aufgabe der vorliegenden Erfindung, einen GGR-Schachtofen und ein Verfahren zum Brennen von Karbonatgestein mit einem GGR-Schachtofen bereitzustellen, die einen geringeren Energiebedarf zur Verdichtung der Prozessgase aufweisen als bekannte GGR-Schachtöfen und Verfahren zum Brennen von Karbonatgestein mit einem GGR-Schachtofen.

Diese Aufgabe wird erfindungsgemäß durch eine Vorrichtung mit den Merkmalen des unabhängigen Verfahrensanspruchs 1 und durch ein Verfahren mit den Merkmalen des unabhängigen Vorrichtungsanspruchs 8 gelöst. Vorteilhafte Weiterbildungen ergeben sich aus den abhängigen Ansprüchen.

Nach einem ersten Aspekt umfasst die Erfindung ein Verfahren zum Brennen und Kühlen von Material, wie Karbonatgesteinen, in einem Gleichstrom-Gegenstrom-Regenerativ-Schachtofen mit zwei Schächten, die abwechselnd als Brennschacht und als Regenerativschacht betrieben werden, wobei das Material durch eine Vorwärmzone, mindestens eine Brennzone und eine Kühlzone zu einem Materialauslass strömt. Zumindest ein Gasstrom wird mittels eines Hochdruckventilators, verdichtet und in den Gleichstrom-Gegenstrom-Regenerativ-Schachtofen eingeleitet.

Der Gleichstrom-Gegenstrom-Regenerativ-Schachtofen weist mindestens zwei Schächte auf, die vorzugsweise parallel zueinander und vertikal angeordnet sind. Die Schächte sind abwechselnd als Brennschacht und als Regenerativschacht betreibbar, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist. Jeder Schacht weist vorzugsweise einen Materialeinlass zu Einlassen von zu brennendem Material in den Schacht auf, wobei sich der Materialeinlass insbesondere am oberen Ende des jeweiligen Schachts befindet, sodass das Material schwerkraftbedingt in den jeweiligen Schacht fällt.

Bei dem Brennstoff handelt es sich beispielsweise um ein Brenngas, wie Hochofengas, mit einem Heizwert von weniger als 6,6 MJ/Nm³ oder Erdgas. Der Brennstoff wird beispielsweise in die Vorwärmzone oder die Brennzone des jeweiligen Schachts aufgegeben.

Die Verdichtung der Gasströme, die dem Schacht, insbesondere dem Brennschacht, zugeführt werden, erfolgt erfindungsgemäß mittels eines oder einer Mehrzahl von Hochdruckventilatoren. Bei einem Hochdruckventilator handelt es sich vorzugsweise um einen Ventilator, der derart ausgebildet ist, dass er den Gasstrom auf einen Druck von etwa 300mbar bis 500mbar, insbesondere 400mbar verdichtet. Der Hochdruckventilator ist vorzugsweise als Axialventilator oder als Radialventilator ausgebildet mit einem axial oder radial durchströmten Laufrad, das vorzugsweise in einem Gehäuse rotiert. Die Drehzahl des Hochdruckventilators wird vorzugsweise über einen mit diesem verbundenen Frequenzumrichter eingestellt. Im Unterschied zu einem herkömmlichen Verdichter, wie beispielsweise einem Drehkolbengebläse, weist der Hochdruckverdichter eine Kennlinie, insbesondere Druck-Volumen-Kennlinie oder Leistungskurve, auf, die nicht linear verläuft.

Ein solcher Hochdruckventilator bietet den Vorteil eines relativ zu alternativen Verdichtern sehr geringen Stromverbrauchs, wobei gleichzeitig zuverlässig ein Überdruck von etwa 400mbar in dem Schacht erzeugt wird. Der Erfindung liegt der Erkenntnis zugrunde, dass ein Hochdruckventilator auch in einem Umschaltvorgang, wobei die Funktion des Brennschachts und des Regenerativschachts getauscht wird, ausreichend Betriebssicherheit bietet und einen ausreichenden Druckabfall in dem als Brennschacht betriebenen Schacht bei einem Umschaltvorgang gewährleistet.

Gemäß einer ersten Ausführungsform handelt es sich bei dem mittels des einen oder der Mehrzahl von Hochdruckventilatoren verdichteten Gasströme um einen Kühlluftstrom der in die Kühlzone eingeleitet wird, einen Verbrennungsluftstrom, der in die Vorwärmzone und/ oder die Brennzone eingeleitet wird, und/ oder um einen Brenngasstrom, der in die Vorwärmzone und/ oder die Brennzone eingeleitet wird. Es ist ebenfalls denkbar, dass ein Kühlluftstrom, der entlang der Außenwand des Schachtes, vorzugsweise durch den unteren Teil der feuerfesten Auskleidung der Brennzone geleitet wird, mittels des einen oder der Mehrzahl von Hochdruckventilatoren verdichtet wird.

Jeder Schacht weist vorzugsweise eine Mehrzahl von Brennerlanzen auf, die sich in die Vorwärmzone und insbesondere in die Brennzone des jeweiligen Schachts erstrecken und zum Leiten von beispielsweise Brenngas und/ oder einem Oxidationsgas, wie Luft oder mit Sauerstoff angereicherte Luft oder reinem Sauerstoff, dienen.

Gemäß einer weiteren Ausführungsform werden zum Umschalten zwischen dem Betrieb eines Schachts als Brennschacht und dem Betrieb des Schachts als Regenerativschacht vorzugsweise zumindest die folgenden Verfahrensschritte durchgeführt:
a. Beenden der Zufuhr von Brennstoff in den als Brennschacht betriebenen Schacht, und
b. Verringern der Drehzahl des Hochdruckventilators um maximal 50% bis 65%, und/ oder Schließen einer Absperreinrichtung zwischen dem Hochdruckventilator und dem Schacht, sodass weniger oder kein mittels des jeweiligen Hochdruckventilators verdichteter Gasstrom in den Schacht strömt.
c. Zuführen von Brennstoff in den anderen der beiden Schächte. Unter dem anderen der beiden Schächte ist der Schacht zu verstehen, der in Schritt a. nicht als Brennschacht betrieben wird, vorzugsweise der Schacht, der vor dem Umschalten als Regenerativschacht betrieben wurde.

Eine Verringerung der Drehzahl des Hochdruckventilators um maximal 50% bis 65% ist nach einer Erkenntnis der Erfinder bereits ausreichend, um den Umschaltvorgang zwischen dem Betrieb eines Schachts als Brennschacht und als Regenerativschacht durchzuführen ohne überdruckbedingte Beschädigungen des Gleichstrom-Gegenstrom-Regenerativ-Schachtofens hervorzurufen. Vorzugsweise werden die Schritte a. und b. in etwa gleichzeitig durchgeführt.

Bei der Absperreinrichtung handelt es sich beispielsweise um eine Klappe oder ein Ventil, wobei die Absperreinrichtung vorzugsweise derart ausgebildet ist, dass sie in einer geschlossenen Position eine Gasströmung von dem jeweiligen Hochdruckventilator in den Schacht verringert oder vollständig verhindert. In der geschlossenen Position der Absperreinrichtung ist des Weiteren eine Gasströmung zwischen dem Hochdruckventilator und der Umgebung verringert oder vollständig verhindert. Vorzugsweise werden beim Umschaltvorgang keine Entspannungseinrichtungen, wie Klappen oder Ventile, in den Verbrennungsluftleitungen und/ oder Kühlluftleitungen zu dem Schacht geöffnet, um Verbrennungsluft oder Kühlluft an die Umgebung zu entlassen. Dadurch wird eine Abgabe von Kalkstaub an die Umgebungsluft vermieden.

Das Schließen der Absperreinrichtung ermöglicht eine schnelle und effiziente Druckreduzierung innerhalb des Schachts, wodurch ein schnelles Umschalten zwischen dem Betrieb des Schachts als Brennschacht und dem Regenerativschacht möglich ist. Vorzugsweise wird die Absperreinrichtung derart geschlossen, dass der mittels der Hochdruckventilatoren in den Schacht eingeführte Gasstrom um mindestens etwa 50% bis 65% verringert ist.

Das Verringern der Drehzahl der Hochdruckventilatoren gemäß Verfahrensschritt b. erfolgt vorzugsweise über ein Zeitintervall von etwa 10 bis 30 Sekunden, insbesondere 20 Sekunden. Im Anschluss an das Zeitintervall wird der Hochdruckventilator vorzugsweise mit der reduzierten Drehzahl betrieben.

Das Schließen der Absperreinrichtung gemäß Verfahrensschritt b. erfolgt vorzugsweise über einen Zeitraum von etwa 1 bis 5 Sekunden, insbesondere 3 Sekunden. Die Drehzahl Hochdruckventilatoren wird vorzugsweise bei einem Schließen der Absperreinrichtungen nicht oder lediglich geringfügig, wie etwa um 10% bis 30% reduziert.

Gemäß einer weiteren Ausführungsform erfolgen zum Umschalten zwischen dem Betrieb eines Schachts als Brennschacht und dem Betrieb des Schachts als Regenerativschacht zumindest die folgenden Verfahrensschritte:
a. Beenden der Zufuhr von Brennstoff in den als Brennschacht betriebenen Schacht,
b. Verringern der Gasmenge zu dem Hochdruckventilator mittels eines in dem jeweiligen Hochdruckventilator angeordneten Drallreglers,
c. Schließen einer Absperreinrichtung zwischen dem Hochdruckventilator und dem Schacht, sodass weniger oder kein mittels des jeweiligen Hochdruckventilators verdichteter Gasstrom in den Schacht eintritt,
d. Öffnen eines stromabwärts des Hochdruckventilators angeordneten Ablassventils zum Auslassen des mittels des Hochdruckventilators verdichteten Gases aus der Leitung, und
e. Zuführen von Brennstoff in den anderen der beiden Schächte.

In Strömungsrichtung des Gases vor dem Hochdruckventilator ist vorzugsweise eine Durchflussmesseinrichtung angeordnet zur Ermittlung der Menge an Gas, insbesondere Luft, das pro Zeiteinheit durch die Leitung in den Hochdruckventilator strömt. Der Hochdruckventilator weist vorzugsweise einen Drallregler auf, der zur Regelung des Dralls der Gasströmung ausgebildet ist und insbesondere am Gaseinlass des Hochdruckventilators angeordnet ist. Der Drallregler weist beispielsweise eine Mehrzahl von Leitschaufeln auf, die von dem Gasstrom durchströmt werden. Die Anstellwinkel der Leitschaufeln sind vorzugsweise einstellbar, sodass der Drall der in den Hochdruckventilator eintretenden Gasströmung mittels einer Änderung des Anstellwinkels der Leitschaufeln einstellbar ist.

Stromabwärts des Hochdruckventilators ist vorzugsweise eine Druckmesseinrichtung angeordnet ist und zur Ermittlung des Drucks innerhalb der Leitung stromabwärts des Hochdruckventilators ausgebildet ist. Stromabwärts des Hochdruckventilators ist beispielsweise ein Ablassventil angebracht, das in einer geöffneten Position eine Gasströmung aus der Leitung beispielsweise in die Umgebung und in einer geschlossenen Position keine Gasströmung aus der Leitung ermöglicht. Das Ablassventil ist beispielsweise stromaufwärts der Druckmesseinrichtung angeordnet. In Strömungsrichtung des Gases hinter der Druckmesseinrichtung ist vorzugsweise eine bereist vorangehend beschriebene Absperreinrichtung angeordnet.

Bei dem Schritt b wird die Gasmenge um beispielsweise mindestens 50% bis 65% verringert. Das Verringern der Gasmenge erfolgt vorzugsweise mittels des Drallreglers, insbesondere über eine Änderung der Anstellwinkel der Leitschaufeln des Drallreglers. Vorzugsweise wird die Drehzahl des Hochdruckventilators beim Umschaltvorgang im Wesentlichen konstant gehalten oder nur geringfügig, insbesondere um maximal 10% bis 30% reduziert.

Vorzugsweise wird die Menge an Gas, das durch die Leitung in den Hochdruckventilator strömt mittels der Durchflussmesseinrichtung ermittelt. Die Öffnungsweite des Ablassventils ist vorzugsweise stufenlos einstellbar. Vorzugsweise wird die Öffnungsweite des Ablassventils und/ oder der Drallregler in Abhängigkeit des mittel der Durchflussmesseinrichtung ermittelten Menge an Gas eingestellt. Vorzugsweise wird ein Sollwert für die Gasmenge vorab bestimmt.

Überschreitet der ermittelte Wert der Gasmenge den vorabbestimmten Sollwert, wird beispielsweise der Drallregler, insbesondere der Anstellwinkel der Leitschaufeln, derart eingestellt, dass sich die in den Hochdruckventilator eintretende Gasmenge verringert. Unterschreitet der ermittelte Wert der Gasmenge den vorabbestimmten Sollwert, wird beispielsweise der Drallregler, insbesondere der Anstellwinkel der Leitschaufeln, derart eingestellt, dass sich die in den Hochdruckventilator eintretende Gasmenge erhöht.

Überschreitet der ermittelte Wert der Gasmenge den vorabbestimmten Sollwert, wird vorzugsweise die Öffnungsweite des Ablassventils erhöht. Unterschreitet der ermittelte Wert der Gasmenge den vorabbestimmten Sollwert, wird Die Öffnungsweite des Ablassventils verringert.

Die beschriebene Schaltung bietet den Vorteil, dass eine Reduzierung der Drehzahl des Hochdruckventilators nicht notwendig ist. Vielmehr wird die Luftmenge zu dem Hochdruckventilator verringert und vorzugsweise auf ein Minimum reduziert. Eine im Wesentlichen konstante Drehzahl des Hochdruckventilators verhindert Drehzahlschwankungsbedingte mechanische Belastungen an dem Hochdruckventilator zuverlässig.

Gemäß einer weiteren Ausführungsform wird im Anschluss oder gleichzeitig mit dem Schritt b) ein Erhöhen der Drehzahl eines Abgasventilators zur Förderung des Abgases aus dem Gleichstrom-Gegenstrom-Regenerativ-Schachtofen durchgeführt, sodass die Menge an aus dem Schacht, insbesondere dem Regenerativschacht, abgeführten Abgases erhöht und vorzugsweise das Ausströmen von Abgas aus dem Schacht erleichtert wird. Dies sorgt für einen schnellen Druckabfall innerhalb der Schächte des GGR-Ofens. Die Drehzahl der Abgasventilatoren wird beispielsweise um etwa 5% bis 30%, insbesondere 15% erhöht.

Gemäß einer weiteren Ausführungsform werden im Anschluss an den Schritt b und/ oder im Anschluss an das Erhöhen der Drehzahl des Abgasventilators die Abgasabsperreinrichtung in der Abgasleitung zum Leiten von Abgasen aus dem als Brennschacht betriebenen Schacht geöffnet. Vorzugsweise weist jeder Schacht einen Abgasauslass auf, der mit einer Abgasleitung und dem Ventilator verbunden ist. Vorzugsweise ist jedem Abgasauslass eine vorzugsweise in der Abgasleitung angebrachte Abgasabsperreinrichtung, wie beispielsweise eine Klappe oder ein Ventil, zugeordnet, die in der geschlossenen Position ein Strömen von Abgas aus dem jeweiligen Schacht in die Abgasleitung verhindert und in der geöffneten Position erlaubt. Im Betrieb, insbesondere im Brennbetrieb, des GGR-Schachtofens ist vorzugsweise ausschließlich die Abgasabsperreinrichtung geöffnet, die dem Abgasauslass des als Regenerativschacht betriebenen Schachts zugeordnet ist. Beim Umschalten wird vorzugsweise zusätzlich die Abgasabsperreinrichtung geöffnet, die dem Abgasauslass des als Brennschacht betriebenen Schachts zugeordnet ist. Vorzugsweise werden zum Umschalten alle Abgasabsperreinrichtungen der Abgasleitung geöffnet. Dies sorgt zusätzlich für einen schnellen Druckverlust innerhalb des Brennschachts. Insbesondere wird die Abgasabsperreinrichtung geöffnet, sobald der Druck innerhalb des Schachts, insbesondere innerhalb des Brennschachts, einen vorabbestimmten Grenzwert unterschritten hat. Bei dem Grenzwert handelt es sich beispielsweise um etwa 100mbar bis 300mbar, vorzugsweise 200mbar.

Gemäß einer weiteren Ausführungsform wird das gebrannte Material durch ein Austragssystem aus dem Gleichstrom-Gegenstrom-Regenerativ-Schachtofen ausgetragen, wobei das Austragssystem einen Materialauslass und einen sich daran anschließenden Pufferspeicher mit einem weiteren Materialauslass aufweist, und wobei das Material kontinuierlich während des Betriebs eines Schachts als Brennschacht aus dem Gleichstrom-Gegenstrom-Regenerativ-Schachtofen ausgetragen wird und während des Umschaltens zwischen dem Betrieb eines Schachts als Brennschacht und dem Betrieb des Schachts als Regenerativschacht kein Materialaustrag aus dem Gleichstrom-Gegenstrom-Regenerativ-Schachtofen erfolgt. Beispielsweise umfasst der Schritt a. das Schließen des Austragssystems, insbesondere zumindest eines oder aller Materialauslässe des Austragssystems.

Gemäß einer weiteren Ausführungsform wird der Druck innerhalb des Schachts ermittelt und der Materialauslass zum Auslassen von gebranntem Material aus dem als Brennschacht betriebenen Schacht geöffnet, wenn der Druck einen vorabbestimmten Grenzwert unterschritten hat. Dadurch wird ein überdruckbedingter Austritt von Kalkstaub in die Umgebung durch den Materialauslass verhindert. Vorzugsweise wird der Druck innerhalb des Brennschachts ermittelt. Bei dem Grenzwert handelt es sich beispielsweise um 20 mbar. Optional wird im Anschluss an den Schritt b und vor dem Schritt c. der Materialauslass zum Auslasses von Material aus dem als Brennschacht betriebenen Schacht geöffnet, sodass das gebrannte Material aus dem Brennschacht abgeführt wird. Bei dem Materialauslass handelt es sich beispielsweise um Klappen, die insbesondere automatisch oder manuell vorzugsweise stufenlos geöffnet und geschlossen werden können. Im Anschluss, vorzugsweise gleichzeitig oder vor dem Schritt c, wird der Materialauslass vorzugsweise nach einem vorabbestimmten Zeitintervall wieder geschlossen. Im Anschluss daran wird der Betrieb des Schachts umgekehrt, wobei Brennstoff und Verbrennungsluft in vorherigen Regenerativschacht eingeleitet wird.

Es ist ebenfalls denkbar, dass eine Entspannungseinrichtung, wie beispielsweise ein Ventil oder eine Klappe zum Auslassen der Gasströmung an die Umgebung, innerhalb der Verbrennungsluftleitung und/ oder der der Kühlluftleitung geöffnet wird, wenn der ermittelte Druck einen bestimmten Grenzwert überschreitet. Vorzugsweise wird die Entspannungseinrichtung im Anschluss an den Schritt b, insbesondere im Anschluss an das Verringern der Drehzahl des Hochdruckventilators oder das Schließen der Absperreinrichtung, geöffnet. Bei dem Grenzwert handelt es sich beispielweise um 100mbar bis 300mbar, vorzugsweise 200mbar. Die Entspannungseinrichtung weist vorzugsweise eine geschlossene Position auf, in der es einen Gasstrom von dem Ventilator in den Schacht erlaubt und eine geöffnete Position, in der es einen Gasstrom zwischen dem Ventilator und dem Schacht verhindert und einen Gasstrom von dem Ventilator aus der jeweiligen Leitung heraus in die Umgebung erlaubt.

Das Verfahren zum Brennen und Kühlen von Material in einem Gleichstrom-Gegenstrom-Regenerativ-Schachtofen, insbesondere das Umschalten zwischen dem Betrieb eines Schachts als Brennschacht und dem Betrieb des Schachts als Regenerativschacht umfasst eine Vielzahl von Varianten, die vorangehend beschrieben wurden. Zusammenfassend sind im Folgenden zumindest drei Varianten zum Umschalten des Betriebs beispielhaft aufgeführt:
Eine erste Variante zum Umschalten des Betriebs umfasst:
a. Beenden der Zufuhr von Brennstoff in den als Brennschacht betriebenen Schacht und gleichzeitig,
b. Verringern der Drehzahl des Hochdruckventilators um maximal 50% bis 65%, und/ oder Schließen einer Absperreinrichtung zwischen dem Hochdruckventilator und dem Ofen, sodass weniger oder kein mittels des jeweiligen Hochdruckventilators verdichteter Gasstrom in den Schacht strömt sodass der Überdruck im Ofen absinkt und
c. Öffnen der dem Brennschacht zugeordneten Abgasabsperreinrichtung, wenn ein Druck von 200mbar in dem Brennschacht unterschritten wurde, vorzugsweise um den im Ofen befindlichen Restüberdruck in Richtung Abgasfilter abzulassen und anschließend
d. Öffnen und Schließen des Materialauslasses zum Auslassen von Material aus dem Brennschacht und anschließend
e. Zuführen von Oxidationsgas in den der in der Folge als Brennschacht betrieben wird,
f. Schließen der Abgasabsperreinrichtung am Ofenschacht der in der Folge als Brennschacht betrieben wird und anschließend
g. Öffnen der Absperreinrichtungen zwischen den Hochdruckventilatoren und dem Ofen sowie Erhöhen der Drehzahl der Hochdruckventilatoren, sodass die für die Verbrennung und Kühlung erforderlichen Gase wieder in der richtigen Menge zur Verfügung stehen und
h. Zuführen von Brennstoffes in den Brennschacht.

Eine weitere Variante unterscheidet sich von der beschriebenen ersten Variante darin, dass der Schritt c ersetzt wird durch das Öffnen der Entspannungseinrichtungen in der Verbrennungsluft und/ oder der Kühlluftleitung, wenn der Druck in dem Schacht einen Wert von 200mbar unterschreitet, um den in dem Schacht befindlichen Restüberdruck in die Umgebung abzulassen.

Eine weitere Variante unterscheidet sich von der der beschriebenen ersten Variante darin, dass der Schritt d entfällt, wobei der Schritt a das Schließen des Austragssystems umfasst und das Austragssystem gleichzeitig oder im Anschluss an den Schritt h wieder geöffnet wird.

Die Erfindung umfasst des Weiteren einen Gleichstrom-Gegenstrom-Regenerativ-Schachtofen zum Brennen und Kühlen von Material, wie Karbonatgesteinen, mit zwei Schächten, die abwechselnd als Brennschacht und als Regenerativschacht betreibbar sind, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist, der GGR-Schachtofen zumindest einen Hochdruckventilator aufweist, der zur Verdichtung eines in den GGR-Schachtofen eingeleiteten Gasstroms ausgebildet und angeordnet ist.

Die vorangehend mit Bezug auf das Verfahren zum Brennen und Kühlen von Material, wie Karbonatgesteinen, in einem Gleichstrom-Gegenstrom-Regenerativ-Schachtofen beschriebenen Ausführungsformen und Vorteile treffen in vorrichtungsgemäßer Entsprechung ebenfalls auf den Gleichstrom-Gegenstrom-Regenerativ-Schachtofen zu. Der Gleichstrom-Gegenstrom-Regenerativ-Schachtofen weist gemäß einer Ausführungsform einen Verbrennungslufteinlass zum Einlassen von Verbrennungsluft und/ oder eines Brenngases in die Vorwärmzone und/ oder die Brennzone, und einen Kühllufteinlass zum Einlassen von Kühlluft in die Kühlzone auf, wobei der Verbrennungslufteinlass und/ oder der Kühllufteinlass mit jeweils einem Hochdruckventilator verbunden sind, insbesondere derart, dass der Hochdruckverdichter die Kühlluft und die Verbrennungsluft verdichtet. Des Weiteren weist der GGR-Schachtofen vorzugsweise eine Kühlluftringleitung zum Leiten von Kühlluft durch den unteren Teil der feuerfesten Auskleidung der Brennzone auf wobei die Kühlluftringleitung mit einem Ventilator verbunden ist.

Vorzugsweise weist der Gleichstrom-Gegenstrom-Regenerativ-Schachtofen eine Steuerungs-/ Regelungseinrichtung auf, die mit einem Brennstoffeinlass zum Einlassen von Brenngas in den Schacht verbunden und derart ausgebildet ist, dass sie einen Betriebszustand zum Umschalten zwischen dem Betrieb eines Schachts als Brennschacht und dem Betrieb des Schachts als Regenerativschacht vorsieht und die Brenngaszufuhr durch den Brennstoffeinlass in diesem Betriebszustand stoppt.

Der Brennstoffeinlass wird vorzugsweise durch die Brennerlanzen oder den Verbrennungslufteinlass gebildet. Die Brenngaszufuhr wird vorzugsweise über mit dem Brennstoffeinlass verbundene Dosiereinrichtungen, wie Klappen oder Ventile eingestellt. Vorzugsweise ist die Steuerungs-/Regelungseinrichtung mit den Dosiereinrichtungen zur Einstellung der Brenngaszufuhr in den Schacht verbunden.

Insbesondere ist die Steuerungs-/ Regelungseinrichtung mit dem Hochdruckventilator verbunden und derart ausgebildet, dass sie in dem Betriebszustand des Umschaltens die Drehzahl des Hochdruckventilators um maximal 50% bis 65% verringert.

Optional weist jeder Schacht einen Abgasauslass zum Auslassen von Abgasen aus dem jeweiligen Schacht auf, wobei der Abgasauslass mit einem Ventilator verbunden ist und wobei die Steuerungs-/Regelungseinrichtung derart ausgebildet ist, dass sie in dem Betriebszustand des Umschaltens die Drehzahl des Ventilators erhöht.

Das Erhöhen der Drehzahl des Ventilators in der Abgasleitung erfolgt vorzugsweise im Anschluss oder gleichzeitig mit der Verringerung der Drehzahl des Hochdruckventilators. Der Ventilator ist beispielsweise als Niederdruck- oder als Mitteldruckventilator ausgebildet, sodass dieser insbesondere einen Druck von etwa 20mbar bis 40mbar, vorzugsweise 30mbar erzeugt. Des Weiteren ist der Abgasauslass vorzugsweise mit einem stromaufwärts des Ventilators angeordneten Abgasfilter zum Filtern von Staub aus dem Abgas verbunden.

Vorzugsweise ist jeder Abgasauslass über eine Abgasleitung mit dem Ventilator verbunden, wobei in der Abgasleitung zumindest eine Abgassperreinrichtung angeordnet ist, die mit der Steuerungs-/Regelungseinrichtung verbunden ist und wobei die Steuerungs-/Regelungseinrichtung derart ausgebildet ist, dass sie in dem Betriebszustand des Umschaltens die Abgassperreinrichtung im Anschluss an das Erhöhen der Drehzahl des Ventilators öffnet. Insbesondere ist die Abgasabsperreinrichtung mit der Steuerungs-/Regelungseinrichtung derart verbunden, dass diese die Abgasabsperreinrichtung öffnet, wenn der mittels der Druckmesseinrichtung ermittelte Druck innerhalb des Schachts, insbesondere des Brennschachts, einen vorabbestimmten Grenzwert unterschritten hat. Bei dem Grenzwert handelt es sich beispielsweise um etwa 100mbar bis 300mbar, vorzugsweise 200m bar.

Insbesondere weist jeder Schacht einen Materialauslass zum Auslassen von gebranntem Material aus dem jeweiligen Schacht und eine Druckmesseinrichtung zum Ermitteln des Drucks innerhalb des Schachts auf, wobei die Steuerungs-/Regelungseinrichtung mit dem Materialauslass und der Druckmesseinrichtung verbunden und derart ausgebildet ist, dass sie den Materialauslass öffnet, wenn der ermittelte Druck einen vorabbestimmten Grenzwert unterschreitet.

Gemäß einer weiteren Ausführungsform weist jeder Schacht ein Austragssystem mit einem Materialauslass zum Auslassen von gebranntem Material aus dem jeweiligen Schacht und einem sich an den Materialauslass anschließenden Pufferspeicher mit einem weiteren Materialauslass auf.

Das Austragssystem weist vorzugsweise zwei hintereinander angeordnete Materialauslässe, die beispielsweise als Klappen ausgebildet sind, auf, wobei zwischen den Materialauslässen ein Pufferspeicher angeordnet ist. Dieser schleusenartige Materialauslass ermöglicht ein Austragen von Material aus dem jeweiligen Schacht bei einem Überdruck in den Ofenschächten ohne dass Kalkstaub in die Umgebung gelangt. An die Austragssysteme der beiden Schächte schließt sich des Weiteren vorzugsweise ein Bunker zur Aufnahme des Materials an.

Beispielsweise ist jedem Hochdruckventilator eine Absperreinrichtung zugeordnet, die in einer geschlossenen Position eine Gasströmung von dem jeweiligen Hochdruckventilator in den Schacht verhindert und wobei die Steuerungs-/ Regelungseinrichtung mit der Absperreinrichtung verbunden und derart ausgebildet ist, dass sie in dem in dem Betriebszustand des Umschaltens die Absperreinrichtung in die geschlossene Position bewegt.

Vorzugsweise wird die Absperreinrichtung im Anschluss oder gleichzeitig mit dem Verringern der Drehzahl des Hochdruckventilators geschlossen. Die Absperreinrichtung ist beispielsweise eine Klappe oder ein Ventil und vorzugsweise derart ausgebildet, dass sie in einer geschlossenen Position eine Gasströmung von dem jeweiligen Ventilator, insbesondere dem Hochdruckventilator, in den Schacht verhindert. Vorzugsweise weisen die Verbrennungsluftleitung und die Kühlluftleitungen jeweils eine Absperreinrichtung auf, die dem jeweiligen Ventilator nachgeschaltet ist. In der geschlossenen Position der Absperreinrichtung verhindert diese vorzugsweise eine Gasströmung aus der jeweiligen Leitung in die Umgebung.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Darstellung eines GGR-Schachtofens in einer Schnittansicht gemäß einem Ausführungsbeispiel.
Fig. 1a zeigt eine schematische Darstellung des Ausschnittes A der Fig. 1 gemäß einem Ausführungsbeispiel.
Fig. 2 zeigt eine schematische Darstellung eines GGR-Schachtofens in Schnittansicht gemäß einem weiteren Ausführungsbeispiel.

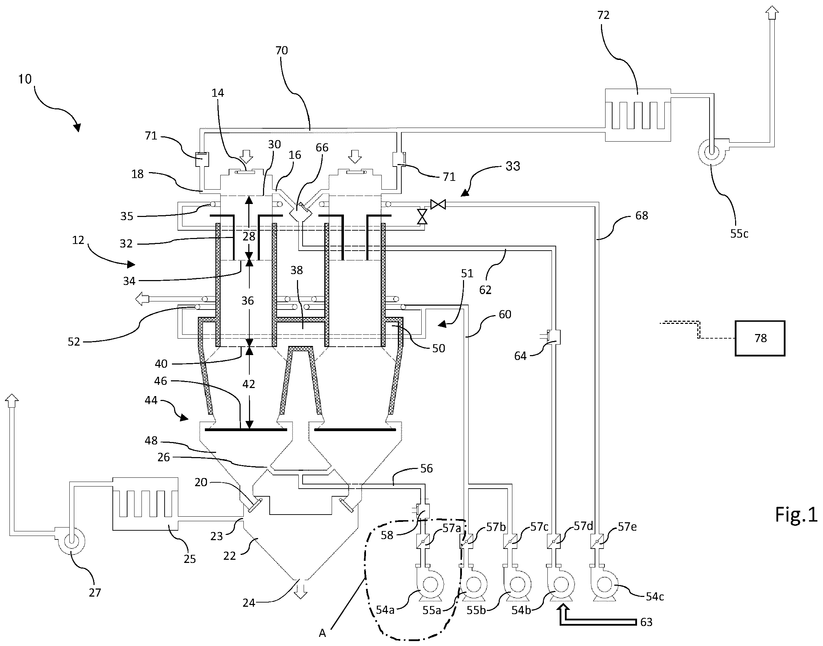

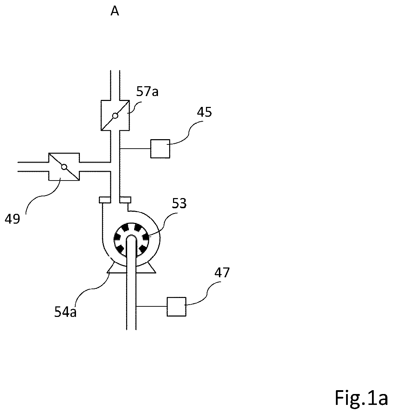

Fig. 1 zeigt einen GGR-Schachtofen 10 mit zwei parallelen und vertikal ausgerichteten Schächten 12. Die Schächte 12 des GGR-Schachtofens 10 sind im Wesentlichen identisch aufgebaut, sodass in Fig. 1 leidglich einer der beiden Schächte 12 mit Bezugszeichen versehen ist und im Folgenden der Einfachheit halber lediglich einer der beiden Schächte beschrieben wird. Jeder Schacht 12 weist jeweils einen Materialeinlass 14 auf zum Einlassen von zu brennenden Material in den jeweiligen Schacht 12 des GGR-Schachtofens. Bei dem zu brennenden Material handelt es sich insbesondere um Kalkstein. Die Materialeinlässe 14 sind beispielhaft an dem oberen Ende des jeweiligen Schachts 12 angeordnet, sodass das Material durch den Materialeinlass 14 schwerkraftbedingt in den Schacht 12 fällt.

Jeder Schacht 12 weist an seinem oberen Ende des Weiteren einen Verbrennungslufteinlass 16 zum Einlassen von Verbrennungsluft oder Brenngas auf. Bei der Verbrennungsluft handelt es sich beispielsweise um Luft, mit Sauerstoff angereicherte Luft oder reinen Sauerstoff. Bei dem Brenngas handelt es sich beispielsweise um Hochofengas oder ein anderes Brenngas mit einem Heizwert von weniger als 6.6 MJ/Nm³. Des Weiteren weist jeder Schacht 12 einen Abgasauslass 18 zum Auslassen von Ofenabgasen aus dem jeweiligen Schacht 12.

An dem unteren Ende jedes Schachtes 12 ist ein Materialauslass 20 zum Auslassen des in dem jeweiligen Schacht 12 gebrannten Materials. Bei dem Materialauslass 20 handelt es sich beispielsweise um Klappen, die insbesondere automatisch geöffnet und geschlossen werden können. Das gebrannte Material wird beispielsweise in einen Bunker 22 geleitet, der sich an die Materialauslässe 20 der Schächte 12 anschließt. Der Bunker 22 ist beispielhaft trichterförmig ausgebildet und weist beispielhaft einen Bunkerauslass 24 zum Auslassen des Materials aus dem Bunker 22 auf. Des Weiteren weist der Bunker einen Abluftauslass 23 zum Auslassen von Abluft aus dem Bunker 22 auf. An den Abluftauslass 23 schließen sich ein Abluftfilter 25 und ein Niederdruckventilator 27 zur Entstaubung des Abgases an.

Jeder Schacht 12 weist an seinem unteren Ende einen Kühllufteinlass 26 zum Einlassen von Kühlluft in den jeweilige Schacht 12 auf. Im Betrieb des GGR-Schachtofens 10 strömt das zu brennende Material von oben nach unten durch den jeweiligen Schacht 12, wobei die Kühlluft von unten nach oben, im Gegenstrom zu dem Material, durch den jeweiligen Schacht 12 strömt. Das Ofenabgas wird durch den Abgasauslass 18 aus dem Schacht 12 abgeführt.

Unterhalb des Materialeinlasses 14 und des Verbrennungslufteinlasses 16 schließt sich in Strömungsrichtung des Materials die Vorwärmzone 28 des jeweilige Schachtes 12 an. In der Vorwärmzone 28 wird das Material und die Verbrennungsluft oder optional das Material und das Brenngas vorzugsweise auf etwa 700°C vorgewärmt. Vorzugsweise ist der jeweilige Schacht 12 bis zu der oberen Begrenzungsfläche 30 der Vorwärmzone 28 mit zu brennendem Material gefüllt. Das Material und optional der Brennstoff, insbesondere das Brenngas, werden vorzugsweise oberhalb der Vorwärmzone 28 in den jeweiligen Schacht 12 aufgegeben. Zumindest ein Teil der Vorwärmzone 28 und der sich in Strömungsrichtung des Materials daran anschließende Teil des jeweiligen Schachtes 12 sind beispielsweise mit einer feuerfesten Auskleidung umgeben.

In der Vorwärmzone 28 sind optional eine Mehrzahl von Brennerlanzen 32 angeordnet und dienen jeweils als Einlass für Brennstoff, wie beispielsweise ein Brenngas, Öl oder gemahlener fester Brennstoff. Der GGR-Schachtofen 10 weist vorzugsweise eine Kühleinrichtung 33 zur Kühlung der Brennerlanzen auf. Die Kühleinrichtung umfasst eine Mehrzahl von Kühlluftringleitungen 35, die sich ringförmig um den Schachtbereich erstrecken, in dem die Brennerlanzen 32 angeordnet sind. Durch die Kühlluftringleitungen 35 strömt Kühlluft zur Kühlung der Brennerlanzen 32.

Vorzugsweise sind in jedem Schacht 12 eine Mehrzahl, beispielsweise zwölf Brennerlanzen 32 und im Wesentlichen gleichmäßig zueinander beabstandet angeordnet. Die Brennerlanzen 32 weisen beispielsweise eine L-Form auf und erstrecken sich vorzugsweise in horizontaler Richtung in den jeweiligen Schacht 12 hinein und innerhalb des Schachtes 12 in vertikaler Richtung, insbesondere in Strömungsrichtung des Materials. Die Enden der Brennerlanzen 32 eines Schachtes 12 sind vorzugsweise alle auf demselben Höhenniveau angeordnet. Vorzugsweise ist die Ebene, an der die Lanzenenden 32 angeordnet sind, jeweils die untere Begrenzungsfläche 34 der jeweiligen Vorwärmzone 32, 34. Alternativ oder zusätzlich zu den Brennerlanzen 32 können auch Schlitze in der Schachtwand Einlässe zum Einlassen von Verbrennungsluft in den Schacht ausbilden.

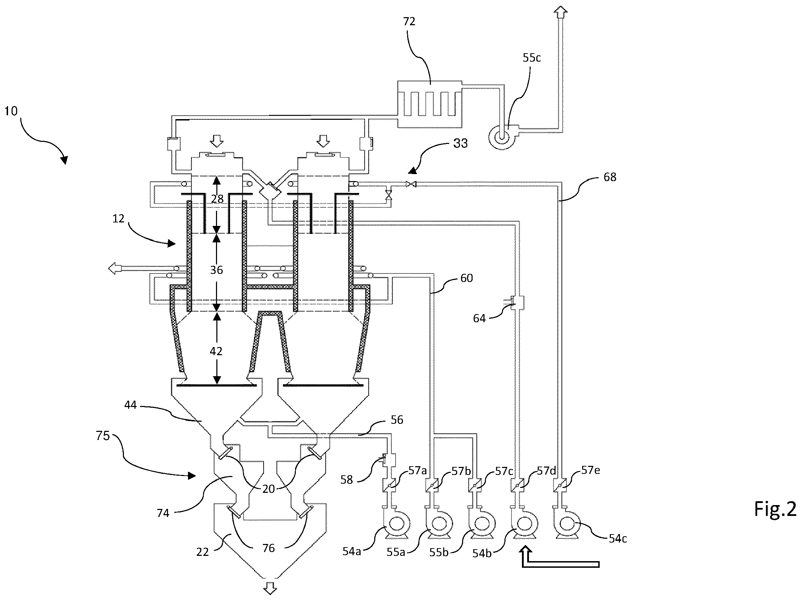

An die Vorwärmzone 28 schließt sich in Strömungsrichtung des Materials die Brennzone 36 an. In der Brennzone 36 wird der Brennstoff verbrannt und das vorgewärmte Material bei einer Temperatur von etwa 1000°C gebrannt. Der GGR-Schachtofen 10 weist des Weiteren einen Überströmkanal 38 zum gastechnischen Verbinden der beiden Schächte 12 miteinander auf. Die Figuren 1 und 2 zeigen beispielhaft einen GGR-Kalkofen mit runden Schachtquerschnitten. Der Schachtquerschnitt kann jedoch eine andere geometrische Kontur aufweisen. Je nach verwendeter Querschnittsform der Schächte sind Gassammelkanäle 50 angeordnet die mit dem Überströmkanal 38 verbunden sind. Es sind auch Schachtquerschnitte möglich, bei denen auf die zusätzlichen Gassammelkanäle 50 verzichtet werden kann. Auf dem oberen Höhenniveau des Überströmkanals 38 ist vorzugsweise die untere Begrenzungsfläche 40 der Brennzone 36, insbesondere das Ende der Brennzone 36, angeordnet. An die Brennzone 36 schließt sich in Strömungsrichtung des Materials in jedem Schacht 12 eine Kühlzone 42 an, die sich bis zum Materialauslass 20 oder der Austragseinrichtung des jeweiligen Schachtes erstreckt. Das Material wird innerhalb der Kühlzone 42 auf etwa 100°C abgekühlt.

An dem materialauslassseitigen Ende eines jeden Schachtes 12 ist vorzugsweise eine Austragseinrichtung 44 angeordnet. Die Austragseinrichtungen 44 umfassen beispielsweise horizontale Platten, vorzugsweise einen Austragstisch 46, die einen seitlichen Durchtritt des Materials zwischen dem Austragstisch 46 und der Gehäusewand des GGR-Schachtofens erlauben. Die Austragseinrichtung 44 ist vorzugsweise als Schub- oder Drehtisch oder als Tisch mit Schubräumer ausgeführt. Dies ermöglicht eine gleichmäßige Durchsatzgeschwindigkeit des Brennguts durch die Schächte 12. Die Austragseinrichtung 44 umfasst des Weiteren beispielhaft einen Austragstrichter 48, der sich an den Austragstisch anschließt und an dessen unterem Ende der Materialauslass 20 angebracht ist.

Im Betrieb des GGR-Schachtofens 10 ist jeweils einer der Schächte 12 aktiv, wobei der jeweils andere Schacht 12 passiv ist. Der aktive Schacht 12 wird als Brennschacht und der passive Schacht 12 als Regenerativschacht bezeichnet. Der GGR-Schachtofen 10 wird zyklisch betrieben, eine übliche Zykluszahl beträgt beispielsweise 75 bis 150 Zyklen pro Tag. Nach Ablauf der Zykluszeit wird die Funktion der Schächte 12 getauscht. Dieser Vorgang wiederholt sich fortlaufend. Über die Materialeinlässe 14 wird abwechseln Material wie Kalk- oder Dolomitstein in die Schächte 12 aufgegeben. In dem als Brennschacht betriebenen Schacht 12 wird über die Brennerlanzen 32 ein Brennstoff oder ein Oxidationsgas wie zum Beispiel Luft, mit Sauerstoff angereicherte Luft oder reiner Sauerstoff in den Brennschacht eingeleitet. Das zu brennende Material wird in der Vorwärmzone 28 des Brennschachts auf eine Temperatur von etwa 700°C erwärmt.

Der GGR-Schachtofen 10 weist beispielsweise einen runden, ovalen, viereckigen oder vieleckigen Querschnitt auf. Des Weiteren weist der GGR-Schachtofen 10 optional einen Gassammelkanal 50 auf, der als Ringraum ausgebildet ist. Der Gassammelkanal 50 erstreckt sich vorzugsweise umfangsmäßig um den unteren Bereich der Brennzone 36, insbesondere unterhalb der Brennerlanzen 32. Jeder Schacht 12 kann jeweils einen Gassammelkanal 50 aufweisen, wobei die Gassammelkanäle 50 auf dem Höhenniveau des Überströmkanals 38 zur Verbindung der beiden Schächte 12 angeordnet sind. Die Gassammelkanäle 50 der beiden Schächte 12 sind insbesondere über den Überströmkanal 38 miteinander gastechnisch verbunden. Insbesondere ist der Gassammelkanal 50 gastechnisch mit der Kühlzone 42 verbunden, sodass das Kühlgas zumindest teilweise in den Gassammelkanal 50 strömt.

Diese Bauweise führt vorteilhafterweise zu einer gleichmäßigeren Gas- und Temperaturverteilung in den Schächten 12 und dadurch zu besserer Produktqualität und zu geringeren Schadstoffemissionen. Ein weiterer Vorteil dieser Bauweise besteht darin, dass allenfalls unverbrannte Brenngase, welche aus der Vorwärmzone 28 in den Überströmkanal 38 strömen dort zusammen mit der Kühlluft, welche dem Brennschacht zugeführt wird noch besser nachverbrannt werden, da das Gaskanalvolumen wesentlich grösser ist.

Der GGR-Schachtofen umfasst des Weiteren vorzugsweise eine Kühleinrichtung 51 zum Kühlen des Schachtbereichs, der die Brennzone 36 aufweist. Insbesondere wird der in die Kühlzone 42 hineinragende Bereich der Brennzone 36 mittels der Kühleinrichtung 51 gekühlt. Die Kühleinrichtung 51 umfasst vorzugsweise eine Mehrzahl von Ringleitungen 52, die sich außen um die Brennzone des Schachts 12 herum erstrecken und durch welche Kühlluft strömt. Beispielhaft sind die Ringleitungen 52 lediglich um den unteren, an die Kühlzone 42 angrenzenden Bereich der Brennzone 36 angebracht.

Der Verbrennungslufteinlass 16, der Kühllufteinlass 26, die Brennerlanzen 32 und die Kühlluftringleitungen 35, 52 sind jeweils über Leitungen mit einem Ventilator 55a,b, insbesondere einem Hochdruckventilator 54a-c verbunden. Die Hochdruckventilatoren 54a-c dienen der Verdichtung der jeweiligen Prozessgase und sind vorzugsweise derart ausgebildet, dass sie jeweils einen Druck von etwa 300mbar bis 500mbar, insbesondere etwa 400mbar erzeugen. Vorzugsweise ist jedem Ventilator 55a-c, und jedem Hochdruckventilator 54a-c eine Absperreinrichtung 57a-e zugeordnet. Die Absperreinrichtung ist beispielsweise eine Klappe oder ein Ventil und vorzugsweise derart ausgebildet, dass sie in einer geschlossenen Position eine Gasströmung von dem jeweiligen Ventilator 54a-c, 55a-c, insbesondere dem Hochdruckventilator 54a-c, in den Schacht 12 verhindert. Vorzugsweise weisen die Verbrennungsluftleitung 62 und die Kühlluftleitungen 56, 60, 68 jeweils eine Absperreinrichtung 57a-e auf, die dem jeweiligen Ventilator 54a-c, 55a-c nachgeschaltet ist. In der geschlossenen Position der Absperreinrichtung 57 ist vorzugsweise keine Gasströmung aus der jeweiligen Leitung 56, 60, 62, 68 in die Umgebung möglich.

Insbesondere ist der Kühllufteinlass 26 zum Einlassen von Kühlluft in die Kühlzone 42 über eine Kühlluftleitung 56 mit einem Hochdruckventilator 54a verbunden. Die Kühlluftleitung 56 umfasst eine Entspannungseinrichtung 58, wie beispielsweise ein Ventil oder eine Klappe, die vorzugsweise stufenlos von einer geöffneten Position, in der Kühlluft aus der Kühlluftleitung 56 in die Umgebung strömt, in eine geschlossene Position, in der keine Kühlluft aus der Kühlluftleitung 56 austritt, verbracht werden kann.

Die Kühleinrichtung 51 zur Kühlung des Schachtbereichs, der die Brennzone aufweist, ist vorzugsweise über eine Kühlluftleitung 60 mit einem Ventilator 55a und optional mit einem weiteren Ventilator 55b verbunden. Die Ventilatoren 55a, b sind beispielsweise als Mitteldruck oder Hochdruckventilatoren ausgebildet, sodass sie insbesondere einen Druck von etwa 50mbar bis 150mbar, vorzugsweise 80mbar bis 120mbar, insbesondere 100mbar erzeugen.

Insbesondere ist der Verbrennungslufteinlass 16 zum Einlassen von Verbrennungsluft in die Vorwärmzone 28 über eine Verbrennungsluftleitung 62 mit einem Hochdruckventilator 54b verbunden. Die Verbrennungsluftleitung 62 umfasst eine Entspannungseinrichtung 64, wie beispielsweise ein Ventil oder eine Klappe, die vorzugsweise stufenlos von einer geöffneten Position, in der Verbrennungsluft aus der Verbrennungsluftleitung 62 in die Umgebung strömt, in eine geschlossene Position, in der keine Verbrennungsluft aus der Verbrennungsluftleitung 62 austritt, verbracht werden kann. Verbrennungsluftleitung 62 umfasst des Weiteren vorzugsweise eine Verteileinrichtung 66, wie beispielsweise eine Gasweiche oder eine Klappe zum Leiten der Verbrennungsluft zu dem jeweiligen als Brennschacht betriebenen Schacht 12. Die Verteileinrichtung 66 ist vorzugsweise derart ausgebildet, dass sie in zumindest zwei Positionen betreibbar ist, wobei in einer ersten Position Verbrennungsluft ausschließlich in den Verbrennungslufteinlass 16 des ersten Schachts 12 und in einer zweiten Position Verbrennungsluft ausschließlich in den Verbrennungslufteinlass 16 des zweiten Schachts 12 strömbar ist.

Die Kühleinrichtung 33 zur Kühlung der Brennerlanzen 32, insbesondere die Kühlluftringleitung 35, ist vorzugsweise über eine Kühlluftleitung 68 mit einem Hochdruckventilator 54c verbunden.

Der Abgasauslass 18 zum Ablassen der Ofenabgase aus dem GGR-Schachtofen ist vorzugsweise über eine Abgasleitung 70 mit einem Ventilator 55c verbunden. Der Ventilator 55c ist beispielsweise als Mitteldruck ausgebildet, sodass dieser insbesondere einen Druck von etwa 20mbar bis 60mbar, vorzugsweise 25mbar bis 50mbar, insbesondere 35mbar erzeugt. Des Weiteren ist der Abgasauslass 18 vorzugsweise mit einem stromaufwärts des Ventilators 55c angeordneten Abgasfilter 72 verbunden. Die Abgasleitung 70 weist des Weiteren beispielhaft zwei Abgasabsperreinrichtung 71, insbesondere Ventile oder Klappen, auf. Vorzugsweise ist in Strömungsrichtung des Abgases hinter jedem Abgasauslass 18 jeweils eine Abgasabsperreinrichtung 71 angeordnet, sodass jedem Abgasauslass vorzugsweise eine Abgasabsperreinrichtung 71 zugeordnet ist. Die Abgasabsperreinrichtung 71 ist zwischen einer geschlossenen Stellung, in der kein Abgas von dem Schacht 12 durch die Abgasleitung 70 strömbar ist, und einer geöffneten Stellung, in der Abgas durch die Abgasleitung 70 strömbar ist, bewegbar.

Optional ist es denkbar, den Brennstoff, insbesondere das Brenngas, über den Verbrennungslufteinlass 16 in den Brennschacht des GGR-Schachtofens 10 aufzugeben. In dieser Ausführungsform des GGR-Schachtofens handelt es sich bei dem Brenngas insbesondere um Hochofengas, das beispielsweise einen Heizwert von weniger als 6,6 MJ/Nm³ aufweist. Das Brenngas 63, insbesondere das Hochofengas, wird in dieser Ausführungsform in die Verbrennungsluftleitung 62 eingeleitet, wobei insbesondere die Verbrennungsluft durch die Brennerlanzen in den Schacht 12 eingeführt wird. Bei der Verbrennungsluft handelt es sich beispielsweise um sauerstoffhaltige Luft, insbesondere mit Sauerstoff angereicherte Luft oder ein Gas mit einem Sauerstoffanteil von etwa 80% oder nahezu reiner Sauerstoff.

Durch dieses Verfahren verringern sich die Gasmengen, welche durch die Brennzone 36 und durch die Vorwärmzone 28 des Regenerativschachtes strömen, erheblich wobei die durch die Vorwärmzone 28 des Regenerativschachtes strömenden Gase, keinen Wärmeüberschuss enthalten und vorzugsweise eine Abgastemperatur von ca. 100°C aufweisen. Wegen der kleineren Gasmengen reduziert sich der Druckverlust des gesamten Ofens erheblich, was zu einer erheblichen Einsparung an elektrischer Energie an den Prozessgasverdichtern führt.

Fig. 1a zeigt den in Fig. 1 gekennzeichneten Ausschnitt A. Der Ausschnitt A zeigt beispielhaft den Hochdruckventilator 54a, wobei die dargestellte Schaltung bei allen weiteren Hochdruckventilator 54a-c anwendbar ist. In Strömungsrichtung des Gases vor dem Hochdruckventilator 54a ist eine Durchflussmesseinrichtung 47 zur Ermittlung der Menge an Gas, insbesondere Luft, das pro Zeiteinheit durch die Leitung in den Hochdruckventilator 54a strömt. Der Hochdruckventilator 54a weist einen Drallregler 53 auf, der zur Regelung des Dralls der Gasströmung ausgebildet ist und am Gaseinlass des Hochdruckventilators 54a angeordnet ist. Der Drallregler 53 weist beispielsweise eine Mehrzahl von Leitschaufeln auf, die von dem Gasstrom durchströmt werden. Die Anstellwinkel der Leitschaufeln sind vorzugsweise einstellbar, sodass der Drall der in den Hochdruckventilator 54a eintretenden Gasströmung mittels einer Änderung des Anstellwinkels der Leitschaufeln einstellbar ist.

Fig. 1a zeigt des Weiteren eine Druckmesseinrichtung 45, die stromabwärts des Hochdruckventilator 54a angeordnet ist und zur Ermittlung des Drucks innerhalb der Leitung stromabwärts des Hochdruckventilator 54a ausgebildet ist. Stromabwärts des Hochdruckventilators 54a ist beispielhaft ein Ablassventil 49 angebracht, das in einer geöffneten Position eine Gasströmung aus der Leitung beispielsweise in die Umgebung und in einer geschlossenen Position keine Gasströmung aus der Leitung ermöglicht. Das Ablassventil 49 ist beispielhaft stromaufwärts der Druckmesseinrichtung angeordnet. In Strömungsrichtung des Gases hinter der Druckmesseinrichtung 45 ist eine bereist vorangehend beschriebene Absperreinrichtung 57a angeordnet.

In Fig. 2 ist eine weitere Ausführungsform des GGR-Schachtofens dargestellt, die im Wesentlichen dem GGR-Schachtofen 10 der Fig. 1 entspricht mit dem Unterschied, dass das gebrannte Material gestuft ausgetragen wird. Der GGR-Schachtofen 10 der Fig. 2 weist ein Austragssystem 73 auf, das einen Materialauslass 20, wie mit Bezug auf Fig. 1 beschrieben, aufweist. Zusätzlich schließt sich an den Materialauslass 20 und vor dem Bunker 22 ein Pufferspeicher 74 mit einem weiteren Materialauslass 76 zum Auslassen des Materials aus dem Pufferspeicher 74 in den Bunker 22. Der Materialauslass 76 ist beispielsweise identisch mit dem vorangehend beschriebenen Materialauslass 20 ausgebildet. Das Materialaustragssystem 75 der Fig. 2 ermöglicht ein Austragen von Material aus dem GGR-Schachtofen 10 während in dem Brennschacht ein Überdruck herrscht. Dadurch ist ein vollständiger Druckabbau im Umschaltvorgang, in dem die Funktion des Brennschachts und des Regenerativschachts getauscht wird, nicht notwendig.

Der GGR-Schachtofen 10 der Figuren 1 und 2 weist des Weiteren vorzugsweise eine Steuerungs-/ Regelungseinrichtung 78 auf, die vorzugsweise mit den Hochdruckventilatoren 54a-c und den Ventilatoren 55a-c zur Steuerung/Regelung der Drehzahl verbunden ist. Des Weiteren ist die Steuerungs-/ Regelungseinrichtung 78 vorzugsweise mit einer in den Figuren nicht dargestellten Druckmesseinrichtung verbunden, sodass die in dem Schacht 12 angeordnete Druckmesseinrichtung den ermittelten Druck innerhalb des Schachts 12 an die Steuerungs-/ Regelungseinrichtung 78 übermittelt. Die Steuerungs-/ Regelungseinrichtung 78 ist des Weiteren insbesondere mit zumindest einer oder allen Absperreinrichtung 57a-e verbunden, sodass diese mittels der Steuerungs-/ Regelungseinrichtung 78 geöffnet und geschlossen werden können. Die Steuerungs-Regelungseinrichtung 78 ist vorzugsweise mit dem Materialauslass 20, 76 derart verbunden, dass diesen beispielsweise in Abhängigkeit des ermittelten Drucks innerhalb des Schachts 12, insbesondere innerhalb des Brennschachts, schließt oder öffnet.

Im Betrieb des in Fig. 1 und 2 dargestellten GGR-Schachtofens 10 werden zum Umschalten zwischen dem Betrieb eines Schachts 12 als Brennschacht und dem Betrieb des Schachts 12 als Regenerativschacht zumindest die folgenden Verfahrensschritte durchgeführt:
a. Beenden der Zufuhr von Brennstoff in den als Brennschacht betriebenen Schacht 12,
b. Verringern der Drehzahl des Hochdruckventilators 54a-c um maximal 50% bis 65%, und/ oder Schließen einer Absperreinrichtung 57a-e zwischen dem Hochdruckventilator 54a-c und dem Schacht 12, sodass kein mittels des jeweiligen Hochdruckventilators verdichteter Gasstrom in den Schacht 12 eintritt, und
c. nach Erreichen eines Restüberdrucks von beispielsweise weniger als 200mbar Öffnen der Abgasabsperreinrichtung 71 am Ofenschacht welcher gerade Brennschacht war um den im Ofen befindlichen Restüberdruck in Richtung Abgasfilter abzulassen und
d. Öffnen und Schließen des Materialauslasses 20 zum Auslassen von Material aus dem Ofen und anschließend
e. Umstellen der Verteileinrichtung 66 um das Oxidationsgas oder das Brenngas dem Schacht der in der Folge als Brennschacht betrieben wird zuzuführen und
f. Schließen der Abgasabsperreinrichtung 71 am Ofenschacht der in der Folge als Brennschacht betrieben wird und anschließend
g. Öffnen der Absperreinrichtungen 57a-e zwischen den Hochdruckventilatoren und dem Ofen sowie Erhöhen der Drehzahl der Hochdruckventilatoren 54a-c sodass die für die Verbrennung und Kühlung erforderlichen Gase wieder in der richtigen Menge zur Verfügung stehen und anschließend
h. Zuschalten des Brennstoffes am Brennschacht 12.

Die Steuerungs-/Regelungseinrichtung 78 ist vorzugsweise dazu ausgebildet die vorangehend beschriebenen Verfahrensschritte zu steuern/regeln.

Vorzugsweise erfolgen bei einer in Fig. 1 a dargestellten Schaltung der Hochdruckventilatoren 57a-c die folgenden Schritte:
a. Beenden der Zufuhr von Brennstoff in den als Brennschacht betriebenen Schacht 12,
b. Verringern der Gasmenge zu dem Hochdruckventilator 54a-c mittels des Drallreglers 53 des jeweiligen Hochdruckventilators 54a-c,
c. Schließen einer Absperreinrichtung 57a-e zwischen dem Hochdruckventilator 54a-c und dem Schacht 12, sodass kein mittels des jeweiligen Hochdruckventilators 54a-c verdichteter Gasstrom in den Schacht 12 eintritt,
d. Öffnen des Ablassventils 49 zum Auslassen des mittels des Hochdruckventilators 54a-c verdichteten Gases aus der Leitung,
c. nach Erreichen eines Restüberdrucks innerhalb des Ofenschachts von beispielsweise weniger als 200mbar Öffnen der Abgasabsperreinrichtung 71 am Ofenschacht welcher gerade Brennschacht war um den im Ofen befindlichen Restüberdruck in Richtung Abgasfilter abzulassen und
d. Öffnen und Schließen des Materialauslasses 20 zum Auslassen von Material aus dem Ofen und anschließend
e. Umstellen der Verteileinrichtung 66 um das Oxidationsgas oder das Brenngas dem Schacht der in der Folge als Brennschacht betrieben wird zuzuführen und
f. Schließen der Abgasabsperreinrichtung 71 am Ofenschacht der in der Folge als Brennschacht betrieben wird und anschließend
g. Öffnen der Absperreinrichtungen 57a-e zwischen den Hochdruckventilatoren und dem Ofen sowie Erhöhen der Gasmenge zu dem Hochdruckventilator 54a-c mittels des Drallreglers 53 des jeweiligen Hochdruckventilators 54a-c, sodass die für die Verbrennung und Kühlung erforderlichen Gase wieder in der zum Betrieb des Ofens notwendigen Menge zur Verfügung stehen und anschließend
h. Zuschalten des Brennstoffes am Brennschacht 12.

Bei dem Schritt b wird die Gasmenge um beispielsweise mindestens 50% bis 65% verringert. Das Verringern der Gasmenge erfolgt mittels des Drallreglers 53, insbesondere über eine Änderung der Anstellwinkel der Leitschaufeln des Drallreglers 53. Vorzugsweise wird die Drehzahl des Hochdruckventilators 54a-c beim Umschaltvorgang im Wesentlichen konstant gehalten oder nur geringfügig, insbesondere um maximal 10% bis 30% reduziert.

Vorzugsweise wird die Menge an Gas, das durch die Leitung in den Hochdruckventilator 54a-c strömt mittels der Durchflussmesseinrichtung 47 ermittelt. Die Öffnungsweite des Ablassventils 49 ist vorzugsweise stufenlos einstellbar. Vorzugsweise wird die Öffnungsweite des Ablassventils 49 und/ oder der Drallregler 53 in Abhängigkeit des mittel der Durchflussmesseinrichtung 47 ermittelten Menge an Gas eingestellt. Vorzugsweise wird ein Sollwert für die Gasmenge vorab bestimmt.

Überschreitet der ermittelte Wert der Gasmenge den vorabbestimmten Sollwert, wird beispielsweise der Drallregler 53, insbesondere der Anstellwinkel der Leitschaufeln, derart eingestellt, dass sich die in den Hochdruckventilator 54a-c eintretende Gasmenge verringert. Unterschreitet der ermittelte Wert der Gasmenge den vorabbestimmten Sollwert, wird beispielsweise der Drallregler 53, insbesondere der Anstellwinkel der Leitschaufeln, derart eingestellt, dass sich die in den Hochdruckventilator 54a-c eintretende Gasmenge erhöht.

Überschreitet der ermittelte Wert der Gasmenge den vorabbestimmten Sollwert, wird vorzugsweise die Öffnungsweite des Ablassventils 49 erhöht. Unterschreitet der ermittelte Wert der Gasmenge den vorabbestimmten Sollwert, wird Die Öffnungsweite des Ablassventils 49 verringert.

Die in Fig. 1 dargestellte Schaltung bietet den Vorteil, dass eine Reduzierung der Drehzahl des Hochdruckventilators 54a-c nicht notwendig ist. Vielmehr wird die Luftmenge zu dem Hochdruckventilator 54a-c verringert und vorzugsweise auf ein Minimum reduziert. Eine im Wesentlichen konstante Drehzahl des Hochdruckventilators verhindert Drehzahlschwankungsbedingte mechanische Belastungen an dem Hochdruckventilator zuverlässig.

### Bezugszeichenliste

- 10: GGR-Schachtofen
- 12: Schacht
- 14: Materialeinlass zum Einlassen von Kalkstein
- 16: Verbrennungslufteinlass
- 18: Abgasauslass
- 20: Materialauslass
- 22: Bunker
- 23: Abluftauslass
- 24: Bunkerauslass
- 25: Abluftfilter
- 26: Kühllufteinlass
- 27: Niederdruckventilator
- 28: Vorwärmzone
- 30: obere Begrenzungsfläche der Vorwärmzone
- 32: Brennerlanzen
- 33: Kühleinrichtung
- 34: untere Begrenzungsfläche der Vorwärmzonel obere Begrenzungsfläche der Brennzone
- 35: Kühlluftringleitungen
- 36: Brennzone
- 38: Überströmkanal
- 40: untere Begrenzungsfläche der Brennzone/ obere Begrenzungsfläche der Kühlzone
- 42: Kühlzone
- 44: Austragseinrichtung
- 45: Druckmesseinrichtung
- 46: Austragstisch
- 47: Durchflussmesseinrichtung
- 48: Austragstrichter
- 49: Ablassventil
- 50: Gassammelkanal
- 51: Kühleinrichtung
- 52: Kühlluftringleitungen
- 53: Drallregler
- 54a-c: Hochdruckventilator
- 55a -c: Ventilator
- 56: Kühlluftleitung
- 57a-e: Absperreinrichtung
- 58: Entspannungseinrichtung
- 60: Kühlluftleitung
- 62: Verbrennungsluftleitung
- 63: Brenngas
- 64: Entspannungseinrichtung
- 66: Verteileinrichtung
- 68: Kühlluftleitung
- 70: Abgasleitung
- 71: Abgasabsperreinrichtung
- 72: Abgasfilter
- 74: Pufferspeicher
- 75: Austragssystem
- 76: Materialauslass
- 78: Steuerungs-/Regelungseinrichtung

## Patentansprüche

1. Verfahren zum Brennen und Kühlen von Material, wie Karbonatgesteinen, in einem Gleichstrom-Gegenstrom-Regenerativ-Schachtofen (10) mit zwei Schächten (12), die abwechselnd als Brennschacht und als Regenerativschacht betrieben werden, wobei das Material durch eine Vorwärmzone (28), mindestens eine Brennzone (36) und eine Kühlzone (42) zu einem Materialauslass (20, 76) strömt,
**dadurch gekennzeichnet, dass**
zumindest ein Gasstrom mittels eines Hochdruckventilators (54a-c), verdichtet und in den Gleichstrom-Gegenstrom-Regenerativ-Schachtofen (10) eingeleitet wird, wobei der Hochdruckventilator (54a-c) als Axialventilator oder als Radialventilator ausgebildet ist mit einem axial oder radial durchströmten Laufrad.

2. Verfahren nach Anspruch 1, wobei es sich bei dem Gasstrom um einen Kühlluftstrom der in die Kühlzone (42) eingeleitet wird, um einen Verbrennungsluftstrom, der in die Vorwärmzone (28) und/ oder die Brennzone (36) eingeleitet wird, und/ oder um einen Brenngasstrom, der in die Vorwärmzone (28) und/ oder die Brennzone eingeleitet wird, handelt.

3. Verfahren nach einem der vorangehenden Ansprüche, wobei zum Umschalten zwischen dem Betrieb eines Schachts (12) als Brennschacht und dem Betrieb des Schachts (12) als Regenerativschacht zumindest die folgenden Verfahrensschritte erfolgen:
a. Beenden der Zufuhr von Brennstoff in den als Brennschacht betriebenen Schacht (12),
b. Verringern der Drehzahl des Hochdruckventilators (54a-c) um maximal 50% bis 65%, und/ oder Schließen einer Absperreinrichtung (57) zwischen dem Hochdruckventilator (54a-c) und dem Schacht (12), sodass weniger oder kein mittels des jeweiligen Hochdruckventilators verdichteter Gasstrom in den Schacht (12) eintritt, und
c. Zuführen von Brennstoff in den anderen der beiden Schächte (12).

4. Verfahren nach einem der Ansprüche 1 oder 2, wobei zum Umschalten zwischen dem Betrieb eines Schachts (12) als Brennschacht und dem Betrieb des Schachts (12) als Regenerativschacht zumindest die folgenden Verfahrensschritte erfolgen:
a. Beenden der Zufuhr von Brennstoff in den als Brennschacht betriebenen Schacht (12),
b. Verringern der Gasmenge zu dem Hochdruckventilator (54a-c) mittels eines in dem jeweiligen Hochdruckventilator (54a-c) angeordneten Drallreglers (53)
c. Schließen einer Absperreinrichtung (57a-e) zwischen dem Hochdruckventilator (54a-c) und dem Schacht (12), sodass weniger oder kein mittels des jeweiligen Hochdruckventilators (54a-c) verdichteter Gasstrom in den Schacht (12) eintritt,
d. Öffnen eines stromabwärts des Hochdruckventilators (54a-c) angeordneten Ablassventils (49) zum Auslassen des mittels des Hochdruckventilators (54a-c) verdichteten Gases aus der Leitung, und
e. Zuführen von Brennstoff in den anderen der beiden Schächte (12).

5. Verfahren nach Anspruch 3 oder 4, wobei im Anschluss oder gleichzeitig mit dem Schritt b) ein Erhöhen der Drehzahl eines Abgasventilators (55c) zur Förderung des Abgases aus dem Gleichstrom-Gegenstrom-Regenerativ-Schachtofen (10) erfolgt.

6. Verfahren nach einem der Ansprüche 3 bis 5, wobei im Anschluss an den Schritt b das Erhöhen der Drehzahl des Abgasventilators (55c) eine Abgasabsperreinrichtung (71) in der Abgasleitung (70) zum Leiten von Abgasen aus dem als Brennschacht betriebenen Schacht (12) geöffnet wird.

7. Verfahren nach einem der vorangehenden Ansprüche, wobei das gebrannte Material durch ein Austragssystem (75) aus dem Gleichstrom-Gegenstrom-Regenerativ-Schachtofen (10) ausgetragen wird und wobei das Austragssystem einen Materialauslass (20) und einen sich daran anschließenden Pufferspeicher (74) mit einem weiteren Materialauslass (76) aufweist, und
wobei das Material kontinuierlich während des Betriebs eines Schachts (12) als Brennschacht aus dem Gleichstrom-Gegenstrom-Regenerativ-Schachtofen (10) ausgetragen wird und während des Umschaltens zwischen dem Betrieb eines Schachts (12) als Brennschacht und dem Betrieb des Schachts (12) als Regenerativschacht kein Materialaustrag aus dem Gleichstrom-Gegenstrom-Regenerativ-Schachtofen (10) erfolgt.

8. Verfahren nach einem der Ansprüche 1 bis 6, wobei der Druck innerhalb des Schachts (12) ermittelt wird und wobei ein Materialauslass (20) zum Auslassen von gebranntem Material aus dem als Brennschacht betriebenen Schacht (12) geöffnet wird, wenn der Druck einen vorabbestimmten Grenzwert unterschreitet.

9. Gleichstrom-Gegenstrom-Regenerativ-Schachtofen (10) zum Brennen und Kühlen von Material, wie Karbonatgesteinen, mit zwei Schächten (12), die abwechselnd als Brennschacht und als Regenerativschacht betreibbar sind, wobei jeder Schacht (12) in Strömungsrichtung des Materials eine Vorwärmzone (28) zum Vorwärmen des Materials, eine Brennzone (36) zum Brennen des Materials und eine Kühlzone (42) zum Kühlen des Materials aufweist,
**dadurch gekennzeichnet, dass**
der Gleichstrom-Gegenstrom-Regenerativ-Schachtofen (10) zumindest einen Hochdruckventilator (54a-c) aufweist, der zur Verdichtung eines in den Gleichstrom-Gegenstrom-Regenerativ-Schachtofen (10) eingeleiteten Gasstroms ausgebildet und angeordnet ist, wobei der Hochdruckventilator (54a-c) als Axialventilator oder als Radialventilator ausgebildet ist mit einem axial oder radial durchströmbaren Laufrad.

10. Gleichstrom-Gegenstrom-Regenerativ-Schachtofen (10) nach Anspruch 9, wobei der Gleichstrom-Gegenstrom-Regenerativ-Schachtofen (10) einen Verbrennungslufteinlass (16) zum Einlassen von Verbrennungsluft und/ oder eines Brenngases in die Vorwärmzone (28) und/ oder die Brennzone (36), und
einen Kühllufteinlass (26) zum Einlassen von Kühlluft in die Kühlzone (42) aufweist und
wobei der Verbrennungslufteinlass (16) und/ oder der Kühllufteinlass (26) mit jeweils einem Hochdruckventilator (54a-c) verbunden sind.

11. Gleichstrom-Gegenstrom-Regenerativ-Schachtofen (10) nach einem der Ansprüche 9 bis 10 wobei jeder Schacht (12) ein Austragssystem (75) mit einem Materialauslass (20) zum Auslassen von gebranntem Material aus dem jeweiligen Schacht (12) und einem sich an den Materialauslass anschließenden Pufferspeicher (74) mit einem weiteren Materialauslass (76) aufweist.

## Claims

1. A method for calcining and cooling material, such as carbonate rocks, in a parallel flow - counter flow regenerative shaft kiln (10) having two shafts (12), which are operated alternately as calcining shaft and as regenerative shaft, wherein the material flows through a preheating zone (28), at least one calcining zone (36), and a cooling zone (42) to a product outlet (20, 76),
**characterized in that**
at least one gas flow is compressed by means of a high-pressure fan (54a-c) and introduced into the parallel flow - counter flow regenerative shaft kiln (10), wherein the high-pressure fan (54a-c) is configured as an axial fan or as a radial fan, having an impeller through which flow takes place axially or radially.

2. The method as claimed in claim 1, wherein the gas flow comprises: a cooling air flow which is introduced into the cooling zone (42); a combustion air flow which is introduced into the preheating zone (28) and/or the calcining zone (36); and/or a fuel gas flow which is introduced into the preheating zone (28) and/or the calcining zone.

3. The method as claimed in either of the preceding claims, wherein for switchover between the operation of a shaft (12) as calcining shaft and the operation of the shaft (12) as regenerative shaft, at least the following method steps take place:
a. ending the feeding of fuel into the shaft (12) operated as calcining shaft,
b. reducing the speed of the high-pressure fan (54a-c) by not more than 50% to 65%, and/or closing a shutoff facility (57) between the high-pressure fan (54a-c) and the shaft (12), so that less of or none of the gas flow compressed by means of the respective high-pressure fan enters the shaft (12), and
c. feeding fuel into the other of the two shafts (12).

4. The method as claimed in either of claims 1 and 2, wherein for switchover between the operation of a shaft (12) as calcining shaft and the operation of the shaft (12) as regenerative shaft, at least the following method steps take place:
a. ending the feeding of fuel into the shaft (12) operated as calcining shaft,
b. reducing the gas quantity to the high-pressure fan (54a-c) by means of a swirl regulator (53) disposed in the respective high-pressure fan (54a-c),
c. closing a shutoff facility (57a-e) between the high-pressure fan (54a-c) and the shaft (12), so that less of or none of the gas flow compressed by means of the respective high-pressure fan (54a-c) enters the shaft (12),
d. opening a drain valve (49) disposed downstream of the high-pressure fan (54a-c) to let the gas compressed by means of the high-pressure fan (54a-c) out of the conduit, and
e. feeding fuel into the other of the two shafts (12).

5. The method as claimed in claim 3 or 4, wherein following or simultaneously with step b), the speed of an off-gas fan (55c) is increased for conveying the off-gas out of the parallel flow - counter flow regenerative shaft kiln (10).

6. The method as claimed in any of claims 3 to 5, wherein following the step b the increasing of the speed of the off-gas fan (55c), an off-gas shutoff facility (71) in the off-gas conduit (70) is opened to conduct off-gases out of the shaft (12) operated as calcining shaft.

7. The method as claimed in any of the preceding claims, wherein the calcined material is discharged from the parallel flow - counter flow regenerative shaft kiln (10) by a discharge system (75) and wherein the discharge system has a product outlet (20) and, downstream thereof, a buffer store (74) with a further product outlet (76), and
wherein the material is discharged continuously from the parallel flow - counter flow regenerative shaft kiln (10) during the operation of a shaft (12) as calcining shaft, and there is no discharge of material from the parallel flow - counter flow regenerative shaft kiln (10) during the switchover between the operation of a shaft (12) as calcining shaft and the operation of the shaft (12) as regenerative shaft.

8. The method as claimed in any of claims 1 to 6, wherein the pressure within the shaft (12) is ascertained and wherein a product outlet (20) for letting calcined material out of the shaft (12) operated as calcining shaft is opened if the pressure falls below a predetermined limit.

9. A parallel flow - counter flow regenerative shaft kiln (10) for calcining and cooling material, such as carbonate rocks, having two shafts (12) which can be operated alternately as calcining shaft and as regenerative shaft, wherein each shaft (12) in the flow direction of the material has a preheating zone (28) for preheating the material, a calcining zone (36) for calcining the material, and a cooling zone (42) for cooling the material,
**characterized in that**
the parallel flow - counter flow regenerative shaft kiln (10) has at least one high-pressure fan (54a-c) which is configured and disposed for compressing a gas stream introduced into the parallel flow - counter flow regenerative shaft kiln (10), wherein the high-pressure fan (54a-c) is configured as an axial fan or as a radial fan, with an impeller through which flow can take place axially or radially.

10. The parallel flow - counter flow regenerative shaft kiln (10) as claimed in claim 9, wherein the parallel flow - counter flow regenerative shaft kiln (10) has a combustion air inlet (16) for letting combustion air and/or a fuel gas into the preheating zone (28) and/or the calcining zone (36), and has
a cooling air inlet (26) for letting cooling air into the cooling zone (42), and
wherein the combustion air inlet (16) and/or the cooling air inlet (26) are/is connected respectively to a high-pressure fan (54a-c).

11. The parallel flow - counter flow regenerative shaft kiln (10) as claimed in any of claims 9 to 10, wherein each shaft (12) has a discharge system (75) with a product outlet (20) for letting calcined material out of the respective shaft (12) and with a buffer store (74) downstream of the product outlet and having a further product outlet (76).

## Revendications

1. Méthode de calcination et de refroidissement de matériaux, tels que des roches carbonatées, dans un four à arbre régénératif à flux parallèle et à contre-courant (10) comportant deux arbres (12), qui fonctionnent alternativement comme arbre de calcination et comme arbre régénératif, dans lequel le matériau traverse une zone de préchauffage (28), au moins une zone de calcination (36) et une zone de refroidissement (42) jusqu'à une sortie de produit (20, 76),
**caractérisé par le fait que**
au moins un flux de gaz est comprimé au moyen d'un ventilateur à haute pression (54a-c) et introduit dans le four à arbre régénératif à flux parallèle et à contre-courant (10), le ventilateur à haute pression (54a-c) étant configuré comme un ventilateur axial ou radial, doté d'une roue à travers laquelle le flux s'écoule axialement ou radialement.

2. Procédé selon la revendication 1, dans lequel le flux de gaz comprend : un flux d'air de refroidissement qui est introduit dans la zone de refroidissement (42) ; un flux d'air de combustion qui est introduit dans la zone de préchauffage (28) et/ou la zone de calcination (36) ; et/ou un flux de gaz combustible qui est introduit dans la zone de préchauffage (28) et/ou la zone de calcination.

3. Méthode selon l'une des revendications précédentes, dans laquelle, pour passer de l'exploitation d'un arbre (12) en tant qu'arbre de calcination à l'exploitation de l'arbre (12) en tant qu'arbre de régénération, au moins les étapes suivantes de la méthode ont lieu :
a. terminant l'alimentation en combustible du puits (12) utilisé comme puits de calcination,
b. réduire la vitesse du ventilateur haute pression (54a-c) d'au plus 50 % à 65 %, et/ou fermer un dispositif d'arrêt (57) entre le ventilateur haute pression (54ac) -et l'arbre (12), de sorte que le flux de gaz comprimé au moyen du ventilateur haute pression respectif pénètre moins ou pas du tout dans l'arbre (12), et
c. l'alimentation en carburant de l'autre des deux arbres (12).

4. Méthode selon l'une des revendications 1 et 2, dans laquelle, pour passer de l'exploitation d'un arbre (12) en tant qu'arbre de calcination à l'exploitation de l'arbre (12) en tant qu'arbre de régénération, au moins les étapes suivantes de la méthode ont lieu :
a. terminant l'alimentation en combustible du puits (12) utilisé comme puits de calcination,
b. réduire la quantité de gaz vers le ventilateur à haute pression (54a-c) au moyen d'un régulateur de tourbillon (53) disposé dans le ventilateur à haute pression respectif (54ac-),
c. fermer un dispositif d'arrêt (57a-e) entre le ventilateur haute pression (54ac) -et l'arbre (12), de sorte que le flux de gaz comprimé au moyen du ventilateur haute pression respectif (54a-c) pénètre -moins ou pas du tout dans l'arbre (12),
d. l'ouverture d'une vanne de vidange (49) disposée en aval du ventilateur haute pression (54ac) -pour laisser le gaz comprimé au moyen du ventilateur haute pression (54ac) -s'échapper du conduit, et
e. l'alimentation en carburant de l'autre des deux arbres (12).

5. Procédé selon la revendication 3 ou 4, dans lequel, après ou simultanément à l'étape b), la vitesse d'un ventilateur d'évacuation des gaz (55c) est augmentée pour acheminer les gaz hors du four à arbre régénératif à flux parallèle et à contre-courant (10).

6. Procédé selon l'une des revendications 3 à 5, dans lequel, après l'étape b de l'augmentation de la vitesse du ventilateur d'évacuation des gaz (55c), un dispositif de fermeture des gaz (71) dans le conduit d'évacuation des gaz (70) est ouvert pour évacuer les gaz hors du puits (12) utilisé comme puits de calcination.

7. Procédé selon l'une quelconque des revendications précédentes, dans lequel la matière calcinée est déchargée du four à arbre régénératif à flux parallèle et à contre-courant (10) par un système de décharge (75) et dans lequel le système de décharge a une sortie de produit (20) et, en aval de celle-ci, un magasin tampon (74) avec une autre sortie de produit (76), et
dans lequel la matière est déchargée en continu du four à arbre régénératif à flux parallèle et à contre-courant (10) pendant le fonctionnement d'un arbre (12) en tant qu'arbre de calcination, et il n'y a pas de décharge de matière du four à arbre régénératif à flux parallèle et à contre-courant (10) pendant la commutation entre le fonctionnement d'un arbre (12) en tant qu'arbre de calcination et le fonctionnement de l'arbre (12) en tant qu'arbre régénératif.

8. Procédé selon l'une des revendications 1 à 6, dans lequel la pression à l'intérieur du puits (12) est déterminée et dans lequel une sortie de produit (20) permettant d'évacuer la matière calcinée du puits (12) utilisé comme puits de calcination est ouverte si la pression tombe en dessous d'une limite prédéterminée.

9. Four à arbre régénératif à flux parallèle et à contre-courant (10) pour la calcination et le refroidissement de matériaux, tels que des roches carbonatées, comportant deux arbres (12) pouvant être utilisés alternativement comme arbre de calcination et comme arbre de régénération, dans lequel chaque arbre (12) dans le sens d'écoulement du matériau comporte une zone de préchauffage (28) pour préchauffer le matériau, une zone de calcination (36) pour calciner le matériau, et une zone de refroidissement (42) pour refroidir le matériau,
**caractérisé par le fait que**
Le four à arbre régénératif à flux parallèle et à contre-courant (10) comporte au moins un ventilateur à haute pression (54ac) -configuré et disposé pour comprimer un flux de gaz introduit dans le four à arbre régénératif à flux parallèle et à contre-courant (10), le ventilateur à haute pression (54ac) étant -configuré comme un ventilateur axial ou comme un ventilateur radial, avec une roue à travers laquelle l'écoulement peut se produire axialement ou radialement.

10. Four à arbre régénératif à flux parallèle et à contre-courant (10) selon la revendication 9, dans lequel le four à arbre régénératif à flux parallèle et à contre-courant (10) possède une entrée d'air de combustion (16) pour laisser entrer de l'air de combustion et/ou un gaz combustible dans la zone de préchauffage (28) et/ou la zone de calcination (36), et possède
une entrée d'air de refroidissement (26) pour faire entrer de l'air de refroidissement dans la zone de refroidissement (42), et
dans lequel l'entrée d'air de combustion (16) et/ou l'entrée d'air de refroidissement (26) est/sont connectée(s) respectivement à un ventilateur à haute pression (54a-c).

11. Four à arbre régénératif à flux parallèle et à contre-courant (10) selon l'une des revendications 9 à 10, dans lequel chaque arbre (12) possède un système de décharge (75) avec une sortie de produit (20) pour laisser sortir la matière calcinée de l'arbre respectif (12) et avec un magasin tampon (74) en aval de la sortie de produit et ayant une autre sortie de produit (76).
